# EUROPÄISCHE PATENTSCHRIFT

(11) **EP 3 840 417 B1**
(45) Veröffentlichungstag und Bekanntmachung des Hinweises auf die Patenterteilung: **02.08.2023**
(21) Anmeldenummer: 20206542.1
(22) Anmeldetag: 09.11.2020
(51) Int. Cl.: H04R 25/00, H01Q 7/06, H01Q 1/27, H02J 50/10

(54) **HÖRGERÄTE-MODUL, HÖRGERÄT UND HÖRGERÄTE-SET**
HEARING AID MODULE, HEARING AID, AND HEARING AID SET
MODULE D'APPAREIL AUDITIF, APPAREIL AUDITIF ET ENSEMBLE D'APPAREIL AUDITIF

(30) Priorität: 19.12.2019 DE 102019220300; 01.07.2020 DE 102020208233
(43) Veröffentlichungstag der Anmeldung: 23.06.2021
(73) Patentinhaber: Sivantos Pte. Ltd., Singapore 539775 (SG)
(72) Erfinder: NIKLES, Peter, 91054 Erlangen (DE); SCHMIDT, Martin, 91058 Erlangen (DE)
(74) Vertreter: FDST Patentanwälte

(56) Entgegenhaltungen:
- DE-A1-102018 217 468
- US-A1- 2018 027 343
- US-A1- 2019 261 100

## Beschreibung

Die Erfindung betrifft ein Hörgerät. Sie betrifft weiterhin ein binaurales Hörgeräte-Set mit zwei entsprechenden Hörgeräten und darüber hinaus ein Hörgeräte-Modul für ein solches Hörgerät.

Hörgeräte sind prinzipiell bekannt. Ausführungsbeispiele sind dabei unter anderem in der US 2018/027343 A1, der DE 10 2018 217468 A1 und der US 2019/261100 A1 beschrieben.

Als Hörgeräte bezeichnet man typischerweise klassische Hörhilfen, die zur Versorgung von Schwerhörenden dienen. Im weiteren Sinne bezeichnet dieser Begriff jedoch unter anderem zum Beispiel auch Geräte, die zur Unterstützung von normal hörenden Menschen ausgebildet sind. Solche Hörgeräte werden auch als "Personal Sound Amplification Products" oder "Personal Sound Amplification Devices" (kurz: "PSAD") bezeichnet. Diese sind nicht zur Kompensation von Hörverlusten vorgesehen, sondern werden gezielt zur Unterstützung und Verbesserung des normalen menschlichen Hörvermögens in spezifischen Hörsituationen eingesetzt, z.B. zur Unterstützung von Jägern auf der Jagd oder zur Unterstützung bei der Tierbeobachtung, um Tierlaute und sonstige von Tieren erzeugte Geräusche besser wahrnehmen zu können, zur Unterstützung von Sportreportern, um ein verbessertes Sprechen und/oder Sprachverstehen in komplexer Geräuschkulisse zu ermöglichen, zur Unterstützung von Musikern, um die Belastung des Gehöres zu reduzieren, etc.

Unabhängig vom vorgesehenen Einsatzzweck weist ein Hörgerät typischerweise als wesentliche Komponenten unter anderem einen Eingangswandler, eine Signal- oder Datenverarbeitungseinrichtung, welche üblicherweise einen Verstärker umfasst, und einen Ausgangswandler auf. Der Eingangswandler ist dabei in der Regel durch einen akusto-elektrischer Wandler ausgebildet, also beispielsweise durch ein Mikrofon, und/oder durch einen elektromagnetischen Empfänger, zum Beispiel eine Induktionsspule. Als Ausgangswandler wird meist ein elektro-akustischer Wandler eingesetzt, beispielsweise ein Miniaturlautsprecher (auch als "Hörer" bezeichnet), oder ein elektromechanischer Wandler, zum Beispiel ein Knochenleitungshörer, und die Signalverarbeitungseinrichtung ist in der Regel durch eine auf einer Leiterplatine realisierte elektronische Schaltung realisiert.

Ausgehend hiervon liegt der Erfindung die Aufgabe zugrunde, ein vorteilhaft ausgebildetes Hörgerät, ein vorteilhaft ausgebildetes Hörgeräte-Set sowie ein vorteilhaft ausgebildetes Hörgeräte-Modul anzugeben.

Diese Aufgabe wird erfindungsgemäß gelöst durch ein Hörgeräte-Modul mit den Merkmalen des Anspruchs 1, durch ein Hörgerätmit den Merkmalen des Anspruchs 13 sowie durch ein Hörgeräte-Set mit den Merkmalen des Anspruchs 14. Bevorzugte Weiterbildungen sind in den rückbezogenen Ansprüchen enthalten. Die im Hinblick auf das Hörgeräte-Modul angeführten Vorteile und bevorzugten Ausgestaltungen sind sinngemäß auch auf das Hörgerät und/oder auf das Hörgeräte-Set übertragbar und umgekehrt.

Ein erfindungsgemäßes Hörgerät, welches typischerweise ausgebildet ist nach Art eines eingangs beschriebenen Hörgerätes, ist bevorzugt Teil eines erfindungsgemäßen binauralen Hörgeräte-Sets und weist ein erfindungsgemäßes Hörgeräte-Modul auf. Das erfindungsgemäße Hörgeräte-Modul ist dabei vor allem ausgebildet zur Versorgung des Hörgerätes mit elektrischer Energie, so dass dieses auch als Power-Modul, Akkumulator-Modul oder Akkumulator Pack bezeichnet werden kann. Weiter weist das Hörgerät eine Sende- und Empfangseinheit auf für eine Kommunikation mit einem weiteren Gerät, bevorzugt mit einem weiteren Hörgerät und insbesondere mit einem weiteren Hörgerät des Hörgeräte-Sets.

Die Sende- und Empfangseinheit ist hierbei typischerweise ausgebildet für eine Kommunikation im Nahfeldbereich und insbesondere als sogenanntes magnetisch induktives Funksystem. Das heißt, dass die Sende- und Empfangseinheit vorzugsweise ausgelegt ist für eine Kommunikation mit einem weiteren Gerät, welches weniger als 15 m, weiter bevorzugt weniger als 10 m und insbesondere weniger als 0,5 m vom Hörgerät entfernt ist. Die für die Kommunikation genutzte Funkfrequenz, Grundfrequenz oder Trägerfrequenz f_{Funk} der Sende- und Empfangseinheit liegt dabei bevorzugt im Bereich von 500 kHz bis 300 MHz und weiter bevorzugt im Bereich von 1 MHz bis 50 MHz.

Das Hörgeräte-Modul weist als wesentliche Komponenten unter anderem einen Akkumulator sowie einen Ladeschaltkreis zum Aufladen des Akkumulators auf. Der Ladeschaltkreis wiederum weist eine Lade-Leiterschleife auf und ist für ein kontaktloses, insbesondere ein induktives, Aufladen des Akkumulators ausgebildet. Die Funkfrequenz, Grundfrequenz oder Trägerfrequenz der zum Laden genutzten elektromagnetischen Strahlung f_{Lade} liegt dabei bevorzugt im Bereich von 20 kHz bis 100 MHz, weiter bevorzugt im Bereich von 50 kHz bis 50 MHz und insbesondere im Bereich von 100 kHz bis 30 MHz.

Weiterhin weist die Sende- und Empfangseinheit eine Funk-Leiterschleife auf und die Funk-Leiterschleife ist in das Hörgeräte-Modul integriert. Bevorzugt ist dabei das Hörgerät derart ausgelegt, dass f_{Lade} kleiner ist als f_{Funk}. Das Verhältnis f_{Funk}/ f_{Lade} liegt hierbei dann vorzugsweise im Bereich 10 bis 100 und insbesondere im Bereich 20 bis 50.

Unabhängig davon ist bei einem erfindungsgemäßen Hörgerät typischerweise ein recht kompakter Aufbau realisiert und mit Hilfe des Hörgeräte-Moduls ist ein zumindest teilweise modularer Aufbau realisiert. Ein entsprechendes Hörgeräte-Modul wird dabei üblicherweise vorgefertigt und im Rahmen einer Endmontage des Hörgerätes verbaut. Dabei weist das Hörgeräte-Modul eine Art Gehäuse oder Trägereinheit für die übrigen Komponenten, Bauteile oder Baugruppen des Hörgeräte-Moduls auf. Jenes Gehäuse oder jene Trägereinheit weist dann typischerweise eine Anzahl Befestigungselemente zur mechanischen Befestigung des Hörgeräte-Moduls im Hörgerät auf sowie üblicherweise eine Anzahl Verbindungselemente, zum Beispiel Anschlusskontakte, zur elektrischen Verbindung des Hörgeräte-Moduls mit weiteren Komponenten im Hörgerät.

Je nach Ausführungsvariante bildet hierbei der Akkumulator ein solches Gehäuse oder eine solche Trägereinheit aus. Einer alternativen Ausgestaltung entsprechend weist das Hörgeräte-Modul einen Basiskörper als Gehäuse oder Trägereinheit auf, welcher beispielsweise als eine Art Hohlkörper ausgebildet ist. In oder an einem solchen Basiskörper ist dann typischerweise der Akkumulator des Hörgerätes angeordnet und/oder befestigt. Außerdem sind bevorzugt Teile des Ladeschaltkreises im Basiskörper untergebracht und/oder am Basiskörper befestigt.

Weist nun das Hörgeräte-Modul einen zuvor genannten Basiskörper auf, so ist dieser bevorzugt aus einem ferrimagnetischen, insbesondere einem weichmagnetischen ferrimagnetischen, Material hergestellt oder weist eine Struktur oder Komponente aus einem solchen Material auf. Hierbei ist der Basiskörper zum Beispiel aus einem Ferrit hergestellt. Die magnetische Permeabilität µ_{Basiskörper} eines entsprechenden zuvor genannten Basiskörpers liegt bevorzugt in einem Bereich zwischen 5 und 300 und weiter bevorzugt in einem Bereich zwischen 5 und 100.

Davon unabhängig erstreckt sich der Akkumulator des Hörgeräte-Moduls entlang einer Mittellängsachse oder das Hörgeräte-Modul weist einen solchen Basiskörper auf und zumindest dieser erstreckt sich entlang einer Mittellängsachse und ist dabei zum Beispiel zylinderförmig ausgestaltet, also zum Beispiel als zylinderförmiger Hohlkörper.

Die Funk-Leiterschleife ist weiter derart angeordnet, dass diese in einer Umfangsrichtung um die Mittellängsachse und um den Basiskörper und/oder den Akkumulator herum verläuft. Außerdem ist die Funk-Leiterschleife je nach Ausführungsvariante als Spule mit mehreren Windungen ausgestaltet, also beispielsweise als Zylinderspule.

Außerdem ist die Lade-Leiterschleife derart angeordnet ist, dass diese in der Umfangsrichtung um die Mittellängsachse und um den Basiskörper und/oder den Ackumulator herum verläuft. Je nach Anwendungsfall ist die Lade-Leiterschleife des Weiteren als Spule mit mehreren Windungen ausgestaltet, also zum Beispiel als Zylinderspule.

Auch erstreckt sich typischerweise entlang der Mittellängsachse ein erster Längsabschnitt des Hörgeräte-Moduls sowie ein zweiter Längsabschnitt des Hörgeräte-Moduls. Dabei schließt sich der zweite Längsabschnitt üblicherweise in Richtung der Mittellängsachse unmittelbar an den ersten Längsabschnitt an. Als vorteilhaft wird es dabei angesehen, wenn die Lade-Leiterschleife im ersten Längsabschnitt angeordnet ist und wenn die Funk-Leiterschleife im zweiten Längsabschnitt angeordnet ist. Bevorzugt sind hierbei dann die Lade-Leiterschleife und die Funk-Leiterschleife in Richtung der Mittellängsachse gesehen nebeneinander angeordnet. Darüber hinaus bevorzugt sind die Lade-Leiterschleife und die Funk-Leiterschleife hierbei räumlich voneinander getrennt und dementsprechend ist dann in Richtung der Mittellängsachse gesehen ein Abstand zwischen der Lade-Leiterschleife und der Funk-Leiterschleife vorgesehen und belassen.

Weiterhin ist es zweckdienlich, wenn die Lade-Leiterschleife an dem Akkumulator oder dem zuvor genannten Basiskörper anliegt. Die Lade-Leiterschleife ist dabei dann zum Beispiel direkt oder unmittelbar auf den Akkumulator oder den Basiskörper aufgebracht, beispielsweise aufgedruckt, oder aufgewickelt. Gemäß einer Ausführungsvariante ist die Lade-Leiterschleife hierbei auf den Akkumulator oder den Basiskörper aufgeklebt.

Einer alternativen Ausführungsvariante entsprechend liegt die Lade-Leiterschleife unter Zwischenlage eines Zusatzelements an dem Akkumulator oder dem zuvor genannten Basiskörper an. Ein entsprechendes Zusatzelement ist dann beispielsweise durch eine Beschichtung oder eine Folie ausgebildet oder weist eine Beschichtung oder eine Folie auf. Weiter bevorzugt ist ein solches Zusatzelement aus einem ferrimagnetischen, insbesondere einem weichmagnetischen ferrimagnetischen, Material hergestellt oder weist eine Struktur oder Komponente aus einem solchen Material auf. Hierbei ist das Zusatzelement zum Beispiel aus einem Ferrit hergestellt. Die magnetische Permeabilität µ_{Basiskörper} eines entsprechenden zuvor genannten Zusatzelements liegt bevorzugt in einem Bereich zwischen 5 und 300 und weiter bevorzugt in einem Bereich zwischen 5 und 100.

Zudem weist das Hörgeräte-Modul einen Schirm-Körper auf, der die Lade-Leiter-schleife und die Funk-Leiterschleife trennt. Bei einem entsprechenden Schirm-Körper handelt es sich je nach Ausgestaltung beispielsweise um einen hohlzylinderförmigen Körper. Jener Schirm-Körper weist typischerweise Leitermaterial auf oder ist aus einem Leitermaterial gefertigt und dient der elektromagnetischen Abschirmung. Als Leitermaterial ist beispielsweise Kupfer oder eine Kupferlegierung zweckmäßig. Einer Ausführungsvariante entsprechend bildet eine Folie, also eine Schirm-Folie, den Schirm-Körper aus, wobei die Folie hierbei zum Beispiel aus Kupfer oder einer Kupferlegierung hergestellt ist. Einer weiteren Ausführungsvariante entsprechend weist der Schirm-Körper zur elektromagnetischen Abschirmung eine Leiterstruktur oder eine Leiterschicht auf, beispielsweise eine metallische Schicht oder Beschichtung.

Von Vorteil ist außerdem eine Ausgestaltung, bei der die Lade-Leiterschleife an dem zuvor beschriebenen Schirm-Körper anliegt oder, anders herum, bei der der Schirm-Körper an der Lade-Leiterschleife anliegt. Einer Ausführung entsprechend ist der Schirm-Körper hierbei auf die Lade-Leiterschleife aufgeklebt.

Weiter ist es zweckdienlich, wenn das Hörgeräte-Modul einen Hilfs-Körper aufweist, bei dem typischerweise zumindest ein Teilvolumen ferrimagnetische, insbesondere weichmagnetische ferrimagnetische, Eigenschaften aufweist. Bei einem entsprechenden Hilfs-Körper handelt es sich je nach Ausgestaltung beispielsweise um einen hohlzylinderförmigen Körper. Jener Hilfs-Körper weist üblicherweise ferrimagnetisches, insbesondere weichmagnetisches ferrimagnetisches Material auf oder ist zum Beispiel aus einem ferrimagnetischen, insbesondere einem weichmagnetischen ferrimagnetischen Material gefertigt. Einer Ausführungsvariante entsprechend bildet eine Folie, also eine Hilfs-Folie, den Hilfs-Körper aus, wobei die Folie hierbei zum Beispiel aus einem ferrimagnetischen, insbesondere einem weichmagnetischen ferrimagnetischen Material hergestellt ist. Einer weiteren Ausführungsvariante entsprechend weist der Hilfs-Körper eine Hilfsstruktur oder eine Hilfsschicht auf, welche beispielsweise aus einem ferrimagnetischen, insbesondere einem weichmagnetischen ferrimagnetischen, Material hergestellt ist oder zumindest ferrimagnetische, insbesondere weichmagnetische ferrimagnetische, Eigenschaften aufweist.

Je nach Ausgestaltungsvariante liegt an dem zuvor beschriebenen Hilfs-Körper die Funk-Leiterschleife an. Die Funk-Leiterschleife ist dabei zum Beispiel direkt auf den Hilfs-Körper aufgebracht, beispielsweise aufgedruckt, oder aufgewickelt. Gemäß einer Ausführungsvariante ist die Funk-Leiterschleife hierbei auf den Hilfs-Körper aufgeklebt.

Ist ein entsprechender Hilfs-Körper vorgesehen, so ist dieser bevorzugt auf dem zuvor beschriebenen Schirm-Körper positioniert, aufgebracht oder aufgewickelt. Gemäß einer Ausführungsvariante ist der Hilfs-Körper hierbei auf den Schirm-Körper aufgeklebt.

Von Vorteil ist es außerdem, wenn der zuvor beschriebener Hilfs-Körper die Lade-Leiterschleife und die Funk-Leiterschleife trennt.

Einer weiteren Ausführungsvariante entsprechend weist das Hörgeräte-Modul einen Modul-Köper auf, der den zuvor genannten Schirm-Körper und/oder den zuvor genannten Hilfs-Körper ausbildet. Ein solcher Modul-Körper weist dann zum Beispiel mehrere Schichten, insbesondere in Sandwich-Bauweise, auf, wobei beispielsweise eine Schicht zur elektromagnetischen Abschirmung eine Leiterstruktur oder eine Leiterschicht aufweist und wobei eine Schicht eine zuvor genannte Hilfsschicht ausbildet, welche zum Beispiel aus einem ferrimagnetischen, insbesondere einem weichmagnetischen ferrimagnetischen, Material hergestellt ist oder zumindest ferrimagnetische, insbesondere weichmagnetische ferrimagnetische, Eigenschaften aufweist.

In vorteilhafter Weiterbildung weist der zuvor beschriebene Modul-Körper weiterhin die Funk-Leiterschleife und/oder die Lade-Leiterschleife auf, wobei die Funk-Leiterschleife und/oder die Lade-Leiterschleife zum Beispiel als Leiterbahnen ausgeführt sind.

Unabhängig davon erstreckt sich üblicherweise in einer Radialrichtung quer zur Mittellängsachse ein erster Radialabschnitt des Hörgeräte-Moduls, welcher insbesondere ein zylinderförmiges oder hohlzylinderförmiges Volumen aufweist. Typisch ist dann weiter eine Ausgestaltung, bei der die Lade-Leiterschleife in dem ersten Radialabschnitt angeordnet ist. Hierbei ist die Lade-Leiterschleife beispielsweise unmittelbar auf den Akkumulator oder den Basiskörper aufgedruckt oder die Lade-Leiterschleife ist zum Beispiel unmittelbar auf den Akkumulator oder den Basiskörper aufgewickelt.

Davon unabhängig liegt die maximale Ausdehnung des Leiterquerschnitts (im Falle eines runden Querschnitts der Durchmesser) der Lade-Leiterschleife typischerweise im Bereich 20 µm bis 500 µm, vorzugsweise im Bereich 30 µm bis 300 µm und insbesondere im Bereich 40 µm bis 100 µm. Der Leiterquerschnitt der Lade-Leiterschleife ist hierbei üblicherweise im Wesentlichen gleichbleibend über den Verlauf der Lade-Leiterschleife hinweg. Als Leitermaterial für die Lade-Leiter-schleife ist Kupfer bevorzugt. Zweckdienlich sind auch andere Materialien, welche leitfähig sind und praktisch keine magnetische Permeabilität aufweisen.

An den zuvor genannten ersten Radialabschnitt schließt sich im Falle der meisten Ausführungsvarianten in Radialrichtung ein Zwischenabschnitt des Hörgeräte-Moduls an, an welchen sich wiederum ein zweiter Radialabschnitt des Hörgeräte-Moduls anschließt. Üblicherweise ist dann die Funk-Leiterschleife im zweiten Radialabschnitt angeordnet.

Bevorzugt ist insbesondere eine Ausgestaltung des Hörgeräte-Moduls, bei der die Lade-Leiterschleife im ersten Radialabschnitt angeordnet ist und bei der die Funk-Leiterschleife im zweiten Radialabschnitt angeordnet ist. Die Lade-Leiterschleife und die Funk-Leiterschleife sind dann in Radialrichtung gesehen typischerweise voneinander beabstandet, wobei die Lade-Leiterschleife üblicherweise näher an der Mittellängsachse positioniert ist als die Funk-Leiterschleife.

Unabhängig davon liegt die maximale Ausdehnung des Leiterquerschnitts der Funk-Leiterschleife (im Falle eines runden Querschnitts der Durchmesser) bevorzugt im Bereich 10 µm bis 100 µm und weiter bevorzugt im Bereich 30 µm bis 60 µm. Der Leiterquerschnitt der Funk-Leiterschleife ist hierbei üblicherweise im Wesentlichen gleichbleibend über den Verlauf der Funk-Leiterschleife hinweg. Auch für die Funk-Leiterschleife ist Kupfer als Leitermaterial bevorzugt.

Günstig ist des Weiteren eine Ausführungsvariante, bei der im zuvor beschriebenen Zwischenabschnitt der zuvor genannte Hilfs-Körper angeordnet ist. Der Hilfs-Körper erstreckt sich dabei in Richtung der Mittellängsachse gesehen bevorzugt lediglich über den zweiten Längsabschnitt hinweg, wobei die Ausdehnung in Richtung der Mittellängsachse gesehen weiter bevorzugt etwa der Ausdehnung der Funk-Leiterschleife in Richtung der Mittellängsachse gesehen entspricht.

Davon unabhängig bildet, wie zuvor bereits dargelegt, vorzugsweise eine Hilfs-Folie den Hilfs-Körper aus oder der Hilfs-Körper weist eine Hilfsstruktur oder eine Hilfsschicht auf, welche ferrimagnetische, insbesondere weichmagnetische ferrimagnetische, Eigenschaften aufweist. Hierbei weist weiter bevorzugt die Hilfs-Folie, die Hilfsstruktur oder die Hilfsschicht eine Dicke, Stärke oder Ausdehnung in Radialrichtung im Bereich von 20 µm bis 300 µm und insbesondere von 30 µm bis 200 µm auf. Es handelt sich somit insbesondere um eine recht dünne Folie, Hilfsstruktur oder Hilfsschicht mit einer geringen Ausdehnung in Radialrichtung. Als zweckdienlich wird es zudem angesehen, wenn die Funk-Leiterschleife unmittelbar auf die Hilfs-Folie, Hilfsstruktur oder Hilfsschicht aufgebracht ist oder unmittelbar aufgewickelt ist.

Wie bereits zuvor dargelegt ist im Falle einiger Ausführungsvarianten der zuvor beschriebe Basiskörper vorgesehen, welcher insbesondere aus einem ferrimagnetischen Werkstoff und insbesondere einem weichmagnetischen ferrimagnetischen Werkstoff hergestellt ist. Ist dann zudem der zuvor beschriebene Hilfs-Körper vorgesehen, dann wird bevorzugt ein Hilfs-Körper für das Hörgeräte-Modul verwendet, dessen magnetische Permeabilität größer ist als die magnetische Permeabilität des Basiskörpers. Als magnetische Permeabilität des Hilfs-Körpers ist dabei im Sinne dieser Anmeldung insbesondere die magnetische Permeabilität der zuvor beschriebenen Hilfs-Folie, Hilfsstruktur oder Hilfsschicht zu verstehen. Die magnetische Permeabilität des Basiskörpers µ_{Basiskörper} liegt dabei zum Beispiel Bereich 5 bis 100 wohingegen die magnetische Permeabilität µ_{Hilfsfolie} der Hilfs-Folie bzw. des Hilfskörpers bevorzugt im Bereich 30 bis 1000 liegt. Zudem bevorzugt gilt µ_{Hilfsfolie} größer a*µ_{Basiskörper} mit einem Wert von a im Bereich 2 bis 20 und insbesondere im Bereich 5 bis 10.

Weiterhin ist es von Vorteil, wenn im Zwischenabschnitt der zuvor beschriebene Schirm-Körper angeordnet ist. Der Schirm-Körper ist dabei in einigen Fällen derart angeordnet, dass zwischen dem Schirm-Körper und der Lade-Leiterschleife ein Abstand in Radialrichtung vorgegeben ist. Der entsprechende Abstand ist dabei dann zum Beispiel mittels einer PET-Folie und insbesondere mittels einer sogenannten Kapton-Folie realisiert, die zwischen dem Schirm-Körper und der Lade-Leiterschleife angeordnet ist. Alternativ ist ein entsprechender Abstand mittels einer Lackschicht realisiert.

Unabhängig davon erstreckt sich der zuvor genannte Schirm-Körper weiter bevorzugt in Richtung der Mittellängsachse gesehen sowohl über den ersten Längsabschnitt als auch über den zweiten Lebensabschnitt. Alternativ erstreckt er sich nur über den zweiten Längsabschnitt.

Wie bereits zuvor dargelegt bildet bevorzugt eine Schirm-Folie den Schirm-Körper aus oder der Schirm-Körper weist eine Leiterstruktur oder eine Leiterschicht auf, beispielsweise eine metallische Schicht oder Beschichtung. Die Schirm-Folie, die Leiterstruktur oder die Leiterschicht weist hierbei bevorzugt eine Dicke, Stärke oder Ausdehnung in Radialrichtung im Bereich von 10 µm bis 200 µm und insbesondere im Bereich von 20 µm bis 100 µm auf. Es handelt sich somit insbesondere um eine recht dünne Folie, Leiterstruktur oder Leiterschicht mit einer geringen Ausdehnung in Radialrichtung.

Einer Ausführungsvariante entsprechend weist die Schirm-Folie, Leiterstruktur oder Leiterschicht außerdem eine Anzahl Ausnehmungen oder Durchbrüche auf, beispielsweise runde, ovale oder eckige Löcher, wobei die Ausnehmungen bevorzugt eine Perforierung ausbilden, die sich dann typischerweise über den gesamten Umfang in Umfangsrichtung erstreckt und bevorzugt über den ersten Längsabschnitt und insbesondere lediglich über den ersten Längsabschnitt. Die Anzahl der Ausnehmungen ist dabei typischerweise größer 10 und insbesondere größer 50. Sie liegt üblicherweise im Bereich 50 bis 1000.

Einer weiteren Ausführungsvariante entsprechend bildet der Schirm-Körper und insbesondere die Schirm-Folie, die Leiterstruktur oder die Leiterschicht einen sich in Richtung der Mittellängsachse erstreckenden Spalt aus, der sich insbesondere über die gesamte Ausdehnung des Schirm-Körpers, der Schirm-Folie, der Leiterstruktur oder der Leiterschicht in Richtung der Mittellängsachse erstreckt. Ein solcher Spalt ist dann je nach Ausführungsvariante ergänzt durch eine schaltbare Überbrückungs-Schaltung, die derart ausgebildet ist, dass der Spalt über die Überbrückungs-Schaltung überbrückbar ist. D. h., dass die Überbrückungs-Schaltung in einem Schaltzustand die beiden Ränder des Spaltes überbrückt oder kurzschließt.

Sind sowohl der Schirm-Körper als auch ein Hilfs-Körper vorgesehen, so liegt der Hilfs- Körper bevorzugt unmittelbar auf dem Schirm- Körper auf, ist also zum Beispiel um den Schirm-Körper herumgewickelt. Der Schirm-Körper liegt dann typischerweise näher an der Mittellängsachse als der Hilfs-Körper.

Ergänzend zum Schirm-Körper ist im Falle zumindest eine Ausführungsvariante eine schaltbare Kurzschluss-Leiterschleife vorgesehen. Jene Kurzschluss-Leiter-schleife ist dann typischerweise im Zwischenabschnitt angeordnet. Sie weist weiter bevorzugt eine Anzahl Windungen auf, die dann üblicherweise in Umfangsrichtung um die Mittellängsachse herum und um den Akkumulator oder den Basiskörper herumgeführt sind. Die Kurzschluss-Leiterschleife bildet außerdem bevorzugt eine Art Spule aus, insbesondere eine Art Zylinderspule, die sich vorzugsweise über den ersten Längsabschnitt erstreckt und insbesondere lediglich über den ersten Längsabschnitt hinweg. Befindet sich die Kurzschluss-Leiterschleife im kurzgeschlossenen Schaltzustand, so schirmt die Kurzschluss-Leiterschleife die Lade-Leiterschleife gegen die Funk-Leiterschleife ab.

Ein zuvor beschriebenes Hörgeräte-Modul weist außerdem bevorzugt eine äußere Ummantelung, Umhüllung oder Beschichtung auf, mittels der das Hörgeräte-Modul zumindest teilweise nach außen hin abgeschlossen ist und insbesondere flüssigkeitsdicht nach außen hin abgeschlossen ist. Eine entsprechende äußere Ummantelung, Umhüllung oder Beschichtung lässt sich dabei zum Beispiel durch Tauchen ausbilden.

Ausführungsbeispiele der Erfindung werden nachfolgend anhand einer schematischen Zeichnung näher erläutert. Darin zeigen:
- FIG 1: in einer Blockschaltbilddarstellung ein binaurales Hörgeräte-Set mit zwei Hörgeräten, welche jeweils ein Hörgeräte-Modul aufweisen,
- FIG 2: in einer perspektivischen Ansicht eine Baugruppe des Hörgeräte-Moduls in einer ersten Ausführung,
- FIG 3: in der perspektivischen Ansicht die Baugruppe des Hörgeräte-Moduls in einer zweiten Ausführung,
- FIG 4: in der perspektivischen Ansicht die Baugruppe des Hörgeräte-Moduls in einer dritten Ausführung,
- FIG 5: in einer Schnittdarstellung die Baugruppe des Hörgeräte-Hörgeräte-Moduls in einer vierten Ausführung ohne Akkumulator,
- FIG 6: in der Schnittdarstellung die Baugruppe des Hörgeräte-Moduls in der vierten Ausführung ohne Akkumulator zusammen mit einer Baugruppe eines Ladegerätes,
- FIG 7: in der Schnittdarstellung die Baugruppe des Hörgeräte-Moduls in einer fünften Ausführung ohne Akkumulator sowie
- FIG 8: in der Schnittdarstellung die Baugruppe des Hörgeräte-Moduls in einer sechsten Ausführung ohne Akkumulator.

Einander entsprechende Teile sind in allen Figuren jeweils mit den gleichen Bezugszeichen versehen.

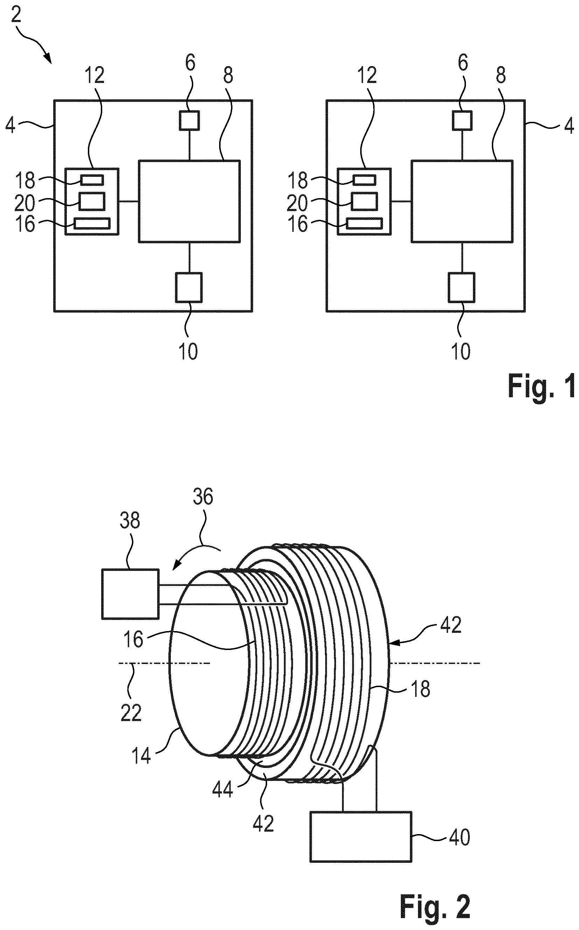

Ein nachfolgend exemplarisch beschriebenes binaurales Hörgeräte-Set 2 ist in Fig. 1 schematisch wiedergegeben und weist zwei Hörgeräte 4 auf, nämlich ein Hörgerät 4 für ein linkes Ohr und ein Hörgerät 4 für ein rechtes Ohr. Hierbei weist jedes der beiden Hörgeräte 4 eine Anzahl von Komponenten oder Baugruppen auf, unter anderem einen Eingangswandler 6, typischerweise ein Mikrofon, eine Steuer- und Datenverarbeitungseinheit 8 sowie einen Ausgangswandler 10, beispielsweise einen Lautsprecher.

Darüber hinaus weist jedes der beiden Hörgeräte 4 ein Hörgeräte-Modul 12 auf, welches zur Versorgung des jeweiligen Hörgerätes 4 mit elektrischer Energie ausgebildet ist. Bestandteile eines solchen Hörgeräte-Moduls 12 sind im Ausführungsbeispiel unter anderem ein Basiskörper 14, eine Lade-Leiterschleife 16 sowie eine Funk-Leiterschleife 18, die zusammen mit weiteren Bestandteilen eine Baugruppe des Hörgeräte-Moduls 12 ausbilden, welche in Fig. 2 bis Fig. 8 in verschiedenen Ausführungsvarianten dargestellt ist.

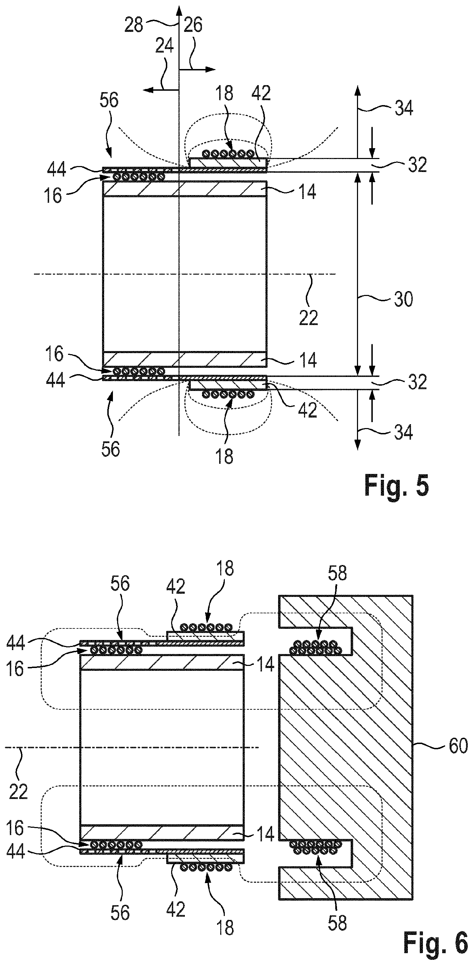

Diesen Ausführungsvarianten gemein ist die Ausgestaltung des Basiskörpers 14 als zylinderförmiger Basiskörper 14 mit einem in Fig. 5 bis Fig. 8 gezeigten hohlen Innenraum, in welchem ein Akkumulator 20 im fertiggestellten Zustand des Hörgeräte-Moduls 12 angeordnet ist. Weiter ist der Basiskörper 14 in allen hier gezeigten Ausführungsvarianten aus einem weichmagnetischen ferrimagnetischen Werkstoff hergestellt mit einer magnetischen Permeabilität µ_{Basiskörper} von beispielsweise 50 und erstreckt sich entlang einer Mittellängsachse 22.

Ausgehend von dieser Mittellängsachse 22 lässt sich dem Hörgeräte-Modul 12 ein sich entlang der Mittellängsachse 22 erstreckender erster Längsabschnitt 24 zuordnen sowie ein sich in Richtung der Mittellängsachse 22 daran anschließender zweiter Längsabschnitt 26. Zudem lässt sich dem Hörgeräte-Modul 12 ein sich in einer Radialrichtung 28 quer zur Mittellängsachse 22 erstreckender erster Radialabschnitt 30 zuordnen, ein sich daran in Radialrichtung 28 anschließender Zwischenabschnitt 32 sowie ein sich wiederum daran in Radialrichtung 28 anschließender zweiter Radialabschnitt 34. Hierbei bilden der Zwischenabschnitt 32 und der zweite Radialabschnitt 34 jeweils ein hohlzylinderförmiges Volumen aus und der erste Radialabschnitt bildet ein zylinderförmiges Volumen aus. Diese Einteilung in Abschnitte ist in Fig. 5 angedeutet und ist für fast alle hier gezeigten oder beschriebenen Ausführungsvarianten gültig.

Fig. 2 zeigt nun eine erste Ausführung der Baugruppe mit dem Basskörper 14, der Lade-Leiterschleife 16 und der Funk-Leiterschleife 18. Hierbei bilden die beiden Leiterschleifen 16,18 jeweils eine Zylinderspule mit mehreren Windungen aus, wobei die Windungen in einer Umfangsrichtung 36 um die Mittellängsachse 22 und um den Basiskörper 14 herum verlaufen.

Unabhängig von der genauen Ausgestaltung des Hörgeräte-Moduls 12 ist die Lade-Leiterschleife 16 Teil eines Ladeschaltkreises 38. Jener Ladeschaltkreis 38 ist dabei bevorzugt ausgebildet zum induktiven Aufladen des Akkumulators 20. Ein entsprechendes Hörgerät 4 ist also typischerweise für ein induktives Aufladen ausgebildet. Die Funk-Leiter-Schleife18 ist dagegen Teil einer Sende- und Empfangseinheit, welche üblicherweise für eine Kommunikation zwischen den Hörgeräten 4 des Hörgeräte-Sets 2 ausgebildet ist. Dabei bilden im Ausführungsbeispiel die Steuer- und Datenverarbeitungseinheit 8, ein Funkschaltkreis 40, welcher durch die Steuer- und Datenverarbeitungseinheit 8 ansteuerbar ist, sowie die Funk-Leiterschleife 18, die Teil des Funkschaltkreises 40 ist, die Sende- und Empfangseinheit aus.

In der Ausführungsvariante gemäß Fig. 2 sind nun die Windungen der Lade-Leiterschleife 16 um den Basiskörper 14 gewickelt und liegen somit direkt auf dem Basiskörper 14 auf. Hierbei sind die Windungen der Lade-Leiterschleife 16 im ersten Längsabschnitt 24 angeordnet. Die Windungen der Funk-Leiterschleifen 18 sind dagegen im zweiten Längsabschnitt 26 angeordnet und somit sind die beiden Leiterschleifen 16,18 in Richtung der Mittellängsachse 22 gesehen nebeneinander angeordnet und auf diese Weise auch räumlich voneinander getrennt.

Die Windungen der Funk-Leiterschleife 18 sind dabei im Ausführungsbeispiel gemäß Fig. 2 auf eine im Zwischenabschnitt 32 positionierte Hilfs-Folie 42 gewickelt und liegen somit direkt auf der Hilfs-Folie 42 auf. Die Hilfs-Folie 42 ist hierbei ebenso wie der Basiskörper 14 aus einem weichmagnetischen ferrimagnetischen Material gefertigt. Allerdings ist die magnetische Permeabilität µ_{Hilfsfolie} der Hilfs-Folie 42 größer als die magnetische Permeabilität µ_{Basiskörper} des Basiskörpers 14 und weist im Ausführungsbeispiel einen Wert von beispielsweise 500 auf. Außerdem ist die Hilfs-Folie 42 im Ausführungsbeispiel 100 µm dick.

Weiter ist die Hilfs-Folie gemäß Fig. 2 ihrerseits um eine Schirm-Folie 44 der Stärke 50 µm gewickelt, welche ebenfalls im Zwischenabschnitt 32 angeordnet ist und aus einem elektrisch leitfähigen Material, beispielsweise Kupfer, besteht. Dabei erstreckt sich die Hilfs-Folie 42 im Falle der Ausführung gemäß Fig. 2 in Richtung der Mittellängsachse 22 gesehen lediglich über den zweiten Längsabschnitt 26 wohingegen sich die Schirm-Folie 44 in Richtung der Mittellängsachse 22 gesehen über den ersten Längsabschnitt 24 und über den zweiten Längsabschnitt 26 erstreckt.

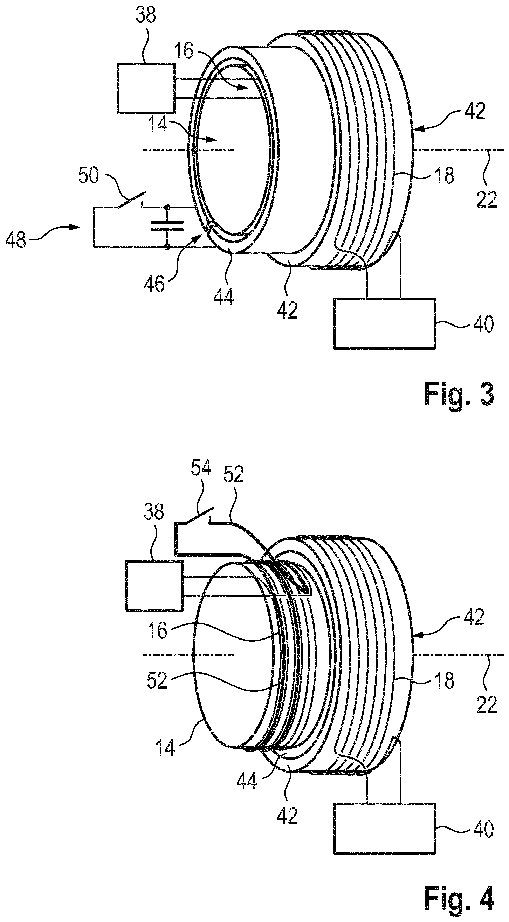

Eine zweite Ausführungsvariante der in Fig. 2 gezeigten Baugruppe ist in Fig. 3 wiedergegeben. Dabei unterscheidet sich die Schirm-Folie 44 gemäß Fig. 3 von der Ausführung gemäß Fig. 2 dadurch, dass diese einen sich in Richtung der Mittellängsachse 22 erstrecken Spalt 46 ausbildet, der sich über die gesamte Ausdehnung der Schirm-Folie 44 in Richtung der Mittellängsachse 22 hinweg erstreckt. Jener Spalt 46 ist dabei in der gezeigten Ausführungsvariante durch eine schaltbare Überbrückungs-Schaltung 48 überbrückbar oder kurzschließbar, wobei die Überbrückungs-Schaltung 48 hierfür einen Schalter 50 aufweist, der durch die Steuer- und Datenverarbeitungseinheit 8 ansteuerbar ist. Die Ansteuerung des Schalters 50 erfolgt dabei derart, dass dieser geschlossen ist, wenn die Funk-Leiterschleife 18 für eine Kommunikation genutzt wird, und geöffnet ist, wenn die Lade-Leiterschleife 16 zum Laden des Akkumulator 20 genutzt wird.

Eine gleichzeitige Nutzung von Lade-Leiterschleife 16 und Funk-Leiterschleife 18 ist unabhängig von der Ausgestaltung des Hörgeräte-Moduls 12 typischerweise nicht vorgesehen und im Falle einiger Ausführungsvarianten durch eine konstruktive Maßnahme und/oder eine geeignete Programmierung ausgeschlossen.

Eine weitere Variante des Hörgeräte-Moduls 12 ist in Fig. 4 angedeutet. Hier erstreckt sich die Schirm-Folie 44 lediglich über den zweiten Längsabschnitt 26. Ergänzt wird die Schirm-Folie 44 hier durch eine schaltbare Kurzschluss-Leiterschleife 52, welche mehrere Windungen aufweist. Diese sind von der Mittellängsachse 22 ausgehend bevorzugt in einer Ebene oberhalb der Lade-Leiterschleife 16 angeordnet, also im Zwischenabschnitt 32. Zur Realisierung eines radialen Abstandes zwischen der Lade-Leiterschleife 16 und der Kurzschluss-Leiterschleife 52 ist zwischen diesen beispielsweise eine nicht dargestellte Lackschicht oder eine Folie, zum Beispiel aus PET, positioniert. Teil dieser Kurzschluss-Leiterschleife 52 ist wiederum eine Schalter 54, der durch die Steuer- und Datenverarbeitungseinheit 8 ansteuerbar ist und in analoger Weise angesteuert wird, wie der Schalter 50 im Falle der Ausführung gemäß Fig. 3.

In Fig. 5 und Fig. 6 ist eine vierte Ausführungsvariante angedeutet. Hier erstreckt sich die Schirm-Folie 44 sowohl über den ersten Längsabschnitt 24 als auch über den zweiten Lebensabschnitt 26. Die Schirm-Folie zur 44 bildet dabei genau wie im Falle der Ausführung gemäß Fig. 2 keinen Spalt 46 aus und ist auch nicht mit einer Überbrückungs-Schaltung 48 gemäß Fig. 3 verbunden. Stattdessen weist die Schirm-Folie 44 im ersten Längsabschnitt 24 eine Perforierung 56 auf mit einer Anzahl Ausnehmungen.

Für diese Ausführungsvariante sind in den beiden Darstellungen gemäß Fig. 5 und Fig. 6 Feldlinienverläufe für zwei Betriebsmodi des zugehörigen Hörgerätes 4 angedeutet, nämlich für einen Betriebsmodus, in dem die Funk-Leiterschleife 18 zur Kommunikation genutzt wird, dies ist in Fig. 5 dargestellt, und für einen Betriebsmodus, in dem eine Spule 58 eines Ladegeräts 60 die Lade-Leiterschleife 16 speist. In beiden Fällen geben gepunktete Linien skizzenhaft den groben Verlauf einer oder mehrerer magnetischer Feldlinien wieder.

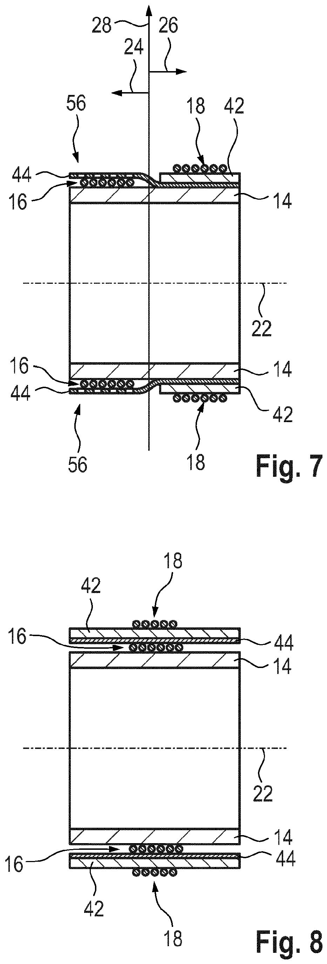

Eine fünfte Ausführungsvariante ist in Fig. 7 wiedergegeben. Hier ist die Lade-Leiterschleife 16 unmittelbar auf den Basiskörper 14 aufgewickelt und vorzugsweise durch Klebung fixiert. Um die Baugruppe aus Basiskörper 14 und Lade-Leiterschleife 16 ist die Schirm-Folie 44 gewickelt, welche im zweiten Längsabschnitt 26 am Basiskörper 14 und im ersten Längsabschnitt 24 an der Lade-Leiterschleife 16 unmittelbar anliegt sowie bevorzugt festgeklebt ist. Um die Schirm-Folie 44 wiederum ist die Hilfs-Folie 42 gewickelt und vorzugsweise angeklebt und um die Hilfs-Folie 42 ist die Funk-Leiterschleife 18 gewickelt und bevorzugt festgeklebt. Dabei erstreckt sich die Hilfs-Folie 42 im Falle der Ausführung gemäß Fig. 7 in Richtung der Mittellängsachse 22 gesehen lediglich über den zweiten Längsabschnitt 26 wohingegen sich die Schirm-Folie 44 in Richtung der Mittellängsachse 22 gesehen über den ersten Längsabschnitt 24 und über den zweiten Längsabschnitt 26 erstreckt.

Schließlich ist in Fig. 8 noch eine sechste Ausführungsvariante dargestellt, bei der im Gegensatz zu den zuvor beschriebenen Ausführungsvarianten die Lade-Leiterschleife 16 und die Funk-Leiterschleife 18 im selben Längsabschnitt angeordnet sind, bei der also quasi die beiden Leiterschleifen 16,18 quasi in verschiedenen Lagen in Umfangsrichtung 36 um den Basiskörper 14 herumgewickelt sind. Zwischen den beiden Leiterschleifen 16,18 sind die Hilfs-Folie 42 einerseits und die Schirm-Folie 44 andererseits angeordnet, sodass die beiden Leiterschleifen 16,18 auch durch die beiden Folien 42,44 voneinander getrennt sind. Hierbei ist die Schirm-Folie 44 der Lade-Leiterschleife 16 zugewandt und die Hilfs-Folie 42 ist der Funk-Leiterschleife 18 zugewandt.

### Bezugszeichenliste

- 2: Hörgeräte-Set
- 4: Hörgerät
- 6: Eingangswandler
- 8: Steuer- und Datenverarbeitungseinheit
- 10: Ausgangswandler
- 12: Hörgeräte-Modul
- 14: Basiskörper
- 16: Lade-Leiterschleife
- 18: Funk-Leiterschleife
- 20: Akkumulator
- 22: Mittellängsachse
- 24: erster Längsabschnitt
- 26: zweiter Längsabschnitt
- 28: Radialrichtung
- 30: erster Radialabschnitt
- 32: Zwischenabschnitt
- 34: zweiter Radialabschnitt
- 36: Umfangsrichtung
- 38: Ladeschaltkreis
- 40: Funkschaltkreis
- 42: Hilfs-Folie
- 44: Schirm-Folie
- 46: Spalt
- 48: Überbrückungs-Schaltung
- 50: Schalter
- 52: Kurzschluss-Leiterschleife
- 54: Schalter
- 56: Perforierung
- 58: Spule
- 60: Ladegerät

## Patentansprüche

1. Hörgeräte-Modul (12) ausgebildet zur Versorgung eines Hörgerätes (4) mit elektrischer Energie und aufweisend einen Akkumulator (20) sowie einen Ladeschaltkreis (38) zum Aufladen des Akkumulators (20), wobei
- der Ladeschaltkreis (38) für ein kontaktloses, insbesondere ein induktives, Aufladen des Akkumulators (20) ausgebildet ist und eine Lade-Leiterschleife (16) aufweist,
- sich der Akkumulator (20) oder ein Basiskörper (14) des Hörgeräte-Moduls (12) entlang einer Mittellängsachse (22) erstreckt und
- die Lade-Leiterschleife (16) derart angeordnet ist, dass diese in einer Umfangsrichtung (36) um die Mittellängsachse (22) und um den Akkumulator (20) oder den Basiskörper (14) herum verläuft,
**dadurch gekennzeichnet, dass**
- das Hörgeräte-Modul (12) eine Funk-Leiterschleife (18) aufweist zur Ausbildung einer Sende- und Empfangseinheit (8,18) des Hörgerätes (4) für eine Kommunikation mit einem weiteren Gerät (4), die Funk-Leiterschleife (18) derart angeordnet ist, dass diese in der Umfangsrichtung (36) um die Mittellängsachse (22) und um den Akkumulator (20) oder den Basiskörper (14) herum verläuft, und
- das Hörgeräte-Modul (12) einen Schirm-Körper (44) aufweist, welcher die Lade-Leiterschleife (16) und die Funk-Leiterschleife (18) trennt.

2. Hörgeräte-Modul (12) nach Anspruch 1,
**dadurch gekennzeichnet,**
**dass** sich entlang der Mittellängsachse (22) ein erster Längsabschnitt (24) des Hörgeräte-Moduls (12) sowie ein sich daran anschließender zweiter Längsabschnitt (26) des Hörgeräte-Moduls (12) erstrecken, dass die Lade-Leiterschleife (16) im ersten Längsabschnitt (24) angeordnet ist und dass die Funk-Leiterschleife (18) im zweiten Längsabschnitt (26) angeordnet ist.

3. Hörgeräte-Modul (12) nach Anspruch 2,
**dadurch gekennzeichnet,**
**dass** sich der Schirm-Körper in Richtung der Mittellängsachse gesehen über den zweiten Längsabschnitt erstreckt.

4. Hörgeräte-Modul (12) nach einem der Ansprüche 1 bis 3,
**dadurch gekennzeichnet,**
**dass** die Lade-Leiterschleife (16) an dem Akkumulator (20) oder an dem Basiskörper (14) des Hörgeräte-Moduls (12) anliegt.

5. Hörgeräte-Modul (12) nach einem der Ansprüche 1 bis 4,
**dadurch gekennzeichnet,**
**dass** das Hörgeräte-Modul (12) einen Hilfs-Körper (42) aufweist, bei dem zumindest ein Teilvolumen ferrimagnetische, insbesondere weichmagnetische ferrimagnetische, Eigenschaften aufweist.

6. Hörgeräte-Modul (12) nach einem der Ansprüche 1 bis 5,
**dadurch gekennzeichnet,**
**dass** die Funk-Leiterschleife (18) an dem Hilfs-Körper (42) anliegt.

7. Hörgeräte-Modul (12) nach einem der Ansprüche 1 bis 6,
**dadurch gekennzeichnet,**
**dass** sich in einer Radialrichtung (28) quer zur Mittellängsachse (22) ein erster Radialabschnitt (30) des Hörgeräte-Moduls (12), ein sich in der Radialrichtung (28) daran anschließender Zwischenabschnitt (32) des Hörgeräte-Moduls (12) sowie ein sich in der Radialrichtung (28) wiederum daran anschließender zweiter Radialabschnitt (34) des Hörgeräte-Moduls (12) erstrecken, dass die Lade-Leiterschleife (16) im ersten Radialabschnitt (30) angeordnet ist und dass die Funk-Leiterschleife (18) im zweiten Radialabschnitt (34) angeordnet ist.

8. Hörgeräte-Modul (12) nach Anspruch 7,
**dadurch gekennzeichnet,**
**dass** im Zwischenabschnitt (32) eine ferrimagnetische Hilfs-Folie (42) angeordnet ist und dass insbesondere der Basiskörper (14) aus einem ferrimagnetischen Werkstoff mit der magnetischen Permeabilität µ_{Basiskörper} hergestellt ist, welche kleiner ist als die magnetische Permeabilität µ_{Hilfsfolie} der Hilfs-Folie (42).

9. Hörgeräte-Modul (12) nach Anspruch 7 oder 8,
**dadurch gekennzeichnet,**
**dass** im Zwischenabschnitt (32) eine Schirm-Folie (44) angeordnet ist, welche insbesondere eine Anzahl Ausnehmungen (56) aufweist zur Ausbildung einer Perforierung (56) in zumindest einem Abschnitt.

10. Hörgeräte-Modul (12) nach Anspruch 9,
**dadurch gekennzeichnet,**
**dass** die Schirm-Folie (44) einen sich in Richtung der Mittellängsachse (22) erstreckenden Spalt (46) ausbildet.

11. Hörgeräte-Modul (12) nach Anspruch 10,
**dadurch gekennzeichnet,**
**dass** das Hörgeräte-Modul (12) eine schaltbare Überbrückungs-Schaltung (48) derart aufweist, dass der Spalt (46) über die Überbrückungs-Schaltung (48) überbrückbar ist.

12. Hörgeräte-Modul (12) nach einem der Ansprüche 7 bis 11,
**dadurch gekennzeichnet,**
**dass** im Zwischenabschnitt (32) eine schaltbare Kurzschluss-Leiterschleife (52) angeordnet ist.

13. Hörgerät (4) aufweisend ein Hörgeräte-Modul (12) nach einem der vorherigen Ansprüche.

14. Binaurales Hörgeräte-Set (2) aufweisend zwei Hörgeräte (4), wobei jedes der beiden Hörgeräte (4) ausgebildet ist als ein Hörgerät (4) nach dem vorherigen Anspruch.

## Claims

1. Hearing aid module (12) designed to supply electrical energy to a hearing aid (4) and having a rechargeable battery (20) and a charging circuit (38) for charging the rechargeable battery (20), wherein
- the charging circuit (38) is designed for contactless, in particular inductive, charging of the rechargeable battery (20) and has a charging conductor loop (16),
- the rechargeable battery (20) or a base body (14) of the hearing aid module (12) extends along a central longitudinal axis (22) and
- the charging conductor loop (16) is arranged such that it runs around the central longitudinal axis (22) and around the rechargeable battery (20) or the base body (14) in a circumferential direction (36),
**characterized in that**
- the hearing aid module (12) has a radio conductor loop (18) so as to form a transceiver unit (8, 18) of the hearing aid (4) for communication with a further device (4), the radio conductor loop (18) is arranged such that it runs around the central longitudinal axis (22) and around the rechargeable battery (20) or the base body (14) in the circumferential direction (36), and
- the hearing aid module (12) has a shielding body (44) that isolates the charging conductor loop (16) and the radio conductor loop (18).

2. Hearing aid module (12) according to Claim 1, **characterized**
**in that** a first longitudinal section (24) of the hearing aid module (12) and a second longitudinal section (26), adjoining said first longitudinal section, of the hearing aid module (12) extend along the central longitudinal axis (22), in that the charging conductor loop (16) is arranged in the first longitudinal section (24) and in that the radio conductor loop (18) is arranged in the second longitudinal section (26).

3. Hearing aid module (12) according to Claim 2,
**characterized**
**in that** the shielding body extends over the second longitudinal section as seen in the direction of the central longitudinal axis.

4. Hearing aid module (12) according to one of Claims 1 to 3,
**characterized**
**in that** the charging conductor loop (16) rests on the rechargeable battery (20) or on the base body (14) of the hearing aid module (12).

5. Hearing aid module (12) according to one of Claims 1 to 4,
**characterized**
**in that** the hearing aid module (12) has an auxiliary body (42), in which at least a partial volume has ferrimagnetic properties, in particular soft-magnetic ferrimagnetic properties.

6. Hearing aid module (12) according to one of Claims 1 to 5,
**characterized**
**in that** the radio conductor loop (18) rests on the auxiliary body (42).

7. Hearing aid module (12) according to one of Claims 1 to 6,
**characterized**
**in that** a first radial section (30) of the hearing aid module (12), an intermediate section (32), adjoining said first radial section in a radial direction (28), of the hearing aid module (12) and a second radial section (34), in turn adjoining said intermediate section in the radial direction (28), of the hearing aid module (12) extend in the radial direction (28) transverse to the central longitudinal axis (22), in that the charging conductor loop (16) is arranged in the first radial section (30) and in that the radio conductor loop (18) is arranged in the second radial section (34).

8. Hearing aid module (12) according to Claim 7,
**characterized**
**in that** a ferrimagnetic auxiliary foil (42) is arranged in the intermediate section (32) and in that in particular the base body (14) is produced from a ferrimagnetic material with the magnetic permeability µ_{basebody} that is less than the magnetic permeability µ_{auxliliaryfoil} of the auxiliary foil (42).

9. Hearing aid module (12) according to Claim 7 or 8, **characterized**
**in that** a shielding foil (44) is arranged in the intermediate section (32) and has in particular a number of recesses (56) so as to form a perforation (56) in at least one section.

10. Hearing aid module (12) according to Claim 9,
**characterized**
**in that** the shielding foil (44) forms a gap (46) that extends in the direction of the central longitudinal axis (22) .

11. Hearing aid module (12) according to claim 10, **characterized**
**in that** the hearing aid module (12) has a switchable bridging circuit (48) such that the gap (46) is able to be bridged by the bridging circuit (48).

12. Hearing aid module (12) according to one of Claims 7 to 11,
**characterized**
**in that** a switchable short-circuit conductor loop (52) is arranged in the intermediate section (32).

13. Hearing aid (4) having a hearing aid module (12) according to one of the preceding claims.

14. Binaural hearing aid set (2) having two hearing aids (4), wherein each of the two hearing aids (4) is designed as a hearing aid (4) according to the preceding claim.

## Revendications

1. Module d'appareil auditif (12) réalisé de façon à alimenter un appareil auditif (4) en énergie électrique et comportant un accumulateur (20) ainsi qu'un circuit d'interrupteur de charge (38) destiné à charger l'accumulateur (20), dans lequel :
- le circuit d'interrupteur de charge (38) est réalisé pour une charge sans contact, notamment inductive, de l'accumulateur (20) et comporte une boucle de conduction de charge (16) ;
- l'accumulateur (20) ou un corps de base (14) du module d'appareil auditif (12) s'étend le long d'un axe central longitudinal (22) ; et
- la boucle de conduction de charge (16) est disposée de façon à s'étendre dans une direction périphérique (36) autour de l'axe central longitudinal (22) et autour de l'accumulateur (20) ou du corps de base (14) ;
**caractérisé en ce que** :
- le module d'appareil auditif (12) comporte une boucle de conduction d'étincelle (18) destinée à former une unité d'envoi et de réception (8, 18) de l'appareil auditif (4) pour une communication avec un appareil supplémentaire (4), la boucle de conduction d'étincelle (18) étant disposée de façon à s'étendre dans la direction périphérique (36) autour de l'axe central longitudinal (22) et autour de l'accumulateur (20) ou du corps de base (14) ; et
- le module d'appareil auditif (12) comporte un corps de protection (44) qui sépare la boucle de conduction de charge (16) et la boucle de conduction d'étincelle (18).

2. Module d'appareil auditif (12) selon la revendication 1, **caractérisé en ce qu'**une première section longitudinale (24) du module d'appareil auditif (12) ainsi qu'une deuxième section longitudinale (26), y étant raccordée, du module d'appareil auditif (12) s'étendent le long de l'axe central longitudinal (22), que la boucle de conduction de charge (16) est disposée dans la première section longitudinale (24) et que la boucle de conduction d'étincelle (18) est disposée dans la deuxième section longitudinale (26).

3. Module d'appareil auditif (12) selon la revendication 2, **caractérisé en ce que** le corps de protection s'étend au-delà de la deuxième section longitudinale, vu en direction de l'axe central longitudinal.

4. Module d'appareil auditif (12) selon l'une quelconque des revendications 1 à 3, **caractérisé en ce que** la boucle de conduction de charge (16) bute contre l'accumulateur (20) ou contre le corps de base (14) du module d'appareil auditif (12).

5. Module d'appareil auditif (12) selon l'une quelconque des revendications 1 à 4, **caractérisé en ce que** le module d'appareil auditif (12) comporte un corps auxiliaire (42) dans lequel au moins un volume partiel présente des propriétés ferromagnétiques, notamment des propriétés ferromagnétiques à magnétisme doux.

6. Module d'appareil auditif (12) selon l'une quelconque des revendications 1 à 5, **caractérisé en ce que** la boucle de conduction d'étincelle (18) bute contre le corps auxiliaire (42).

7. Module d'appareil auditif (12) selon l'une quelconque des revendications 1 à 6, **caractérisé en ce qu'**une première section radiale (30) du module d'appareil auditif (12), une section intermédiaire (32), y étant raccordée dans la direction radiale (28), du module d'appareil auditif (12) ainsi qu'une deuxième section radiale (34), y étant raccordée à son tour dans la direction radiale (28), du module d'appareil auditif (12) s'étendent dans une direction radiale (28) transversalement à l'axe central longitudinal (22), que la boucle de conduction de charge (16) est disposée dans la première section radiale (30) et que la boucle de conduction d'étincelle (18) est disposée dans la deuxième section radiale (34).

8. Module d'appareil auditif (12) selon la revendication 7, **caractérisé en ce qu'**un film auxiliaire ferromagnétique (42) est disposé dans la section intermédiaire (32) et que notamment le corps de base (14) est fabriqué à partir d'un matériau ferromagnétique avec la perméabilité magnétique µ_{Basiskörper} inférieure à la perméabilité magnétique µ_{Hilfsfolie} du film auxiliaire (42) .

9. Module d'appareil auditif (12) selon la revendication 7 ou 8, **caractérisé en ce qu'**un film de protection (44) est disposé dans la section intermédiaire (32), ledit film comportant notamment un certain nombre d'évidements (56) permettant de former une perforation (56) dans au moins une section.

10. Module d'appareil auditif (12) selon la revendication 9, **caractérisé en ce que** le film de protection (44) forme une fente (46) s'étendant dans la direction de l'axe central longitudinal (22).

11. Module d'appareil auditif (12) selon la revendication 10, **caractérisé en ce que** le module d'appareil auditif (12) comporte un circuit d'interrupteur de pontage (48) commutable tel que la fente (46) peut être pontée au-dessus du circuit d'interrupteur de pontage (48).

12. Module d'appareil auditif (12) selon l'une quelconque des revendications 7 à 11, **caractérisé en ce qu'**une boucle de conduction de court-circuit commutable (52) est disposée dans la section intermédiaire (32).

13. Appareils auditif (4) comportant un module d'appareil auditif (12) selon l'une quelconque des revendications précédentes.

14. Ensemble d'appareil auditif binaural (2) comportant deux appareils auditifs (4), dans lequel chacun des deux appareils auditifs (4) est réalisé sous la forme d'un appareil auditif (4) selon la revendication précédente.
